(19) **Europäisches Patentamt**
**European Patent Office**
**Office européen des brevets**

(11) **EP 3 234 413 B1**

(12) **FASCICULE DE BREVET EUROPEEN**

(45) Date de publication et mention
de la délivrance du brevet:
**12.10.2022 Bulletin 2022/41**

(21) Numéro de dépôt: **15805586.3**

(22) Date de dépôt: **16.11.2015**

(51) Classification Internationale des Brevets (IPC):
***F16H 61/28*** *(2006.01)*

(52) Classification Coopérative des Brevets (CPC):
**F16H 61/28;** F16H 2061/0087; F16H 2061/283;
F16H 2306/46; F16H 2342/02

(86) Numéro de dépôt international:
**PCT/FR2015/053073**

(87) Numéro de publication internationale:
**WO 2016/097508 (23.06.2016 Gazette 2016/25)**

(54) **PROCÉDÉ DE CONTRÔLE D'UNE POSITION LIMITE DE DÉSENGAGEMENT D'UN CRABOT MOBILE POUR TRANSMISSION DE VÉHICULE AUTOMOBILE ET TRANSMISSION POUR VÉHICULE AUTOMOBILE CORRESPONDANTE**

VERFAHREN ZUR STEUERUNG EINER ENTKOPPLUNGSGRENZPOSITION EINES BEWEGLICHEN MITNEHMERS FÜR EIN KRAFTFAHRZEUGGETRIEBE UND ENTSPRECHENDES GETRIEBE FÜR EIN KRAFTFAHRZEUG

METHOD FOR CONTROLLING A DISENGAGEMENT LIMIT POSITION OF A MOVABLE DOG FOR A MOTOR VEHICLE TRANSMISSION AND CORRESPONDING TRANSMISSION FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2014 FR 1462403**

(43) Date de publication de la demande:
**25.10.2017 Bulletin 2017/43**

(73) Titulaire: **Renault s.a.s**
**92100 Boulogne Billancourt (FR)**

(72) Inventeurs:
• **CHANTREL, Cédric**
**94220 Charenton Le Pont (FR)**
• **MARSILIA, Marco**
**94230 Cachan (FR)**

(56) Documents cités:
**EP-A1- 1 887 258          DE-A1- 10 201 981**
**DE-A1-102004 017 794**

**Description**

L'invention concerne, de manière générale, les transmissions pour véhicule automobile et, en particulier, mais non exclusivement, les transmissions hybrides pour véhicule automobile comportant d'une part un moteur thermique d'entraînement et d'autre part une machine électrique.

On notera cependant que l'invention ne se limite pas à un tel domaine d'application et se rapporte, de manière générale, aux boîtes de vitesse de véhicule automobile comprenant un système d'actionnement agissant sur un crabot mobile venant en prise avec un crabot fixe lors d'un passage de vitesses.

Dans les boîtes de vitesses de ce type, le système d'actionnement fait appel à un système d'assistance comprenant un moyen de stockage d'énergie qui assure le stockage de l'énergie provenant du système d'actionnement lorsque les dents du crabot mobile viennent en butée contre les dents du crabot fixe pour la restituer lorsque le crabotage ou le décrabotage redevient possible.

Le déplacement du crabot mobile par rapport au crabot fixe est piloté par un système de contrôle de la boîte de vitesses.

L'une des problématiques liée à ce type de boîte de vitesses est de s'assurer, de manière la plus fiable possible, que lorsque le système de contrôle considère que le crabot mobile est en position décrabotée ou de désengagement, le crabot mobile l'est effectivement. En cas d'erreur, c'est-à-dire si le crabot mobile est en prise avec le crabot fixe alors que le système de contrôle considère que le crabot mobile est en position de désengagement, le véhicule peut subir des accélérations ou des décélérations intempestives.

Pour ce faire, le système de contrôle doit disposer de la valeur réelle de la position limite de désengagement des crabots à partir de laquelle un incrément de déplacement du crabot mobile provoque un désengagement des dents des crabots.

On pourra se référer aux documents FR 2 977 198 et FR 2 973 299 qui décrivent une architecture de transmission hybride pour véhicule automobile et un procédé de commande correspondant qui utilisent des systèmes de couplage, notamment à crabot, pour mettre en prise un arbre primaire avec un rotor d'une machine électrique ou avec des pignons fous pour transmettre l'énergie motrice aux roues par l'intermédiaire d'un différentiel. Mais, comme indiqué précédemment, dans ce type de transmission, le système de contrôle de la boîte de vitesses n'est pas en mesure de s'assurer, de manière fiable, de la position de désengagement des crabots mobiles.

Le document DE 10 2004 017794 divulgue un procédé de commande de changement de rapport de vitesse pour véhicule automobile doté d'une boîte de vitesses automatisée. Selon ce procédé, on détecte un paramètre d'usure de l'embrayage et on règle la valeur de la course d'un crabot de changement de rapport en fonction du paramètre détecté. Le paramètre détecté peut être le point d'engagement ou de désengagement du rapport. Ce réglage se fait pendant la durée de vie du véhicule. Le document EP 1 887 258 divulgue un procédé de détermination des positions de début et de fin d'emboîtement d'un crabot de boîte de vitesses.

Le but de l'invention est donc de diagnostiquer une déviation de la position limite de désengagement de crabots mobiles au cours de la vie du véhicule en vue, notamment, de permettre de corriger cette position.

L'invention propose donc un procédé de contrôle de la position limite de désengagement d'un crabot mobile par rapport à un crabot fixe d'une transmission de véhicule automobile qui comporte les étapes suivantes :

- on acquiert des valeurs de position du crabot mobile ;
- on détecte une position de butée du crabot mobile contre le crabot fixe pendant une durée prédéterminée ;
- on calcule ladite position limite à partir de la position du crabot mobile en butée contre le crabot fixe, on compare la position du crabot mobile avec un seuil de détection de position d'engagement et l'on procède à une étape de calcul de ladite position limite si le crabot a été déplacé en position d'engagement. les valeurs de consigne de position du crabot mobile étant traitées de manière à appliquer un retard correspondant à un retard de mise en œuvre d'un actionneur.

En outre, dans un mode de mise en œuvre, on calcule la différence entre la position limite calculée et une position limite de désengagement calibrée, et l'on compare le résultat dudit calcul de différence avec une valeur de seuil de détection de déviation de la position limite de désengagement.

Selon une autre caractéristique du procédé de contrôle selon l'invention, la position de butée du crabot est détectée à partir d'un calcul de la dérivée filtrée de la position du crabot mobile et d'une comparaison de ladite dérivée filtrée avec une valeur de seuil de détection de butée.

On peut notamment détecter une position de butée si la dérivée filtrée est inférieure à ladite valeur de seuil pendant ladite durée déterminée.

L'invention a également pour objet, selon un deuxième aspect, une transmission pour véhicule automobile, comprenant un ensemble d'au moins un crabot mobile par rapport à un ensemble correspondant de crabots fixes sous l'action d'un actionneur.

Cette transmission comporte des moyens pour contrôler une position limite de désengagement du crabot mobile par rapport au crabot fixe, comprenant des moyens pour acquérir des valeurs de position du crabot mobile, des moyens de détection d'une position de butée du crabot mobile contre le crabot fixe pendant une durée prédéterminée, et des moyens de calcul pour calculer ladite position limite de désengagement à partir de la valeur de consigne de position du crabot mobile en butée contre le crabot fixe.

Ainsi, en calculant la valeur limite de position de désengagement du crabot mobile à partir de la valeur de consigne de position du crabot mobile en butée contre le crabot fixe, lorsqu'un ensemble de critères sont satisfaits, portant notamment sur la détection de la position en butée du crabot mobile contre le crabot fixe, on s'assure que la position limite calculée correspond bien à une position limite de désengagement à partir de laquelle un déplacement du crabot mobile, dans le sens du désengagement, provoqué par le mécanisme d'actionnement, entraîne bien un désengagement du crabot mobile.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est un schéma d'architecture d'une transmission de véhicule automobile ;
- la figure 2 illustre de manière schématique le principe de la chaîne d'actionnement d'un passage de vitesses ;
- la figure 3 est un schéma de principe montrant les différentes positions du crabot mobile par rapport au crabot fixe ;
- la figure 4 illustre de manière schématique l'élaboration de la position limite de désengagement du crabot mobile ; et
- la figure 5 illustre les principales phases d'un procédé de contrôle conforme à l'invention.

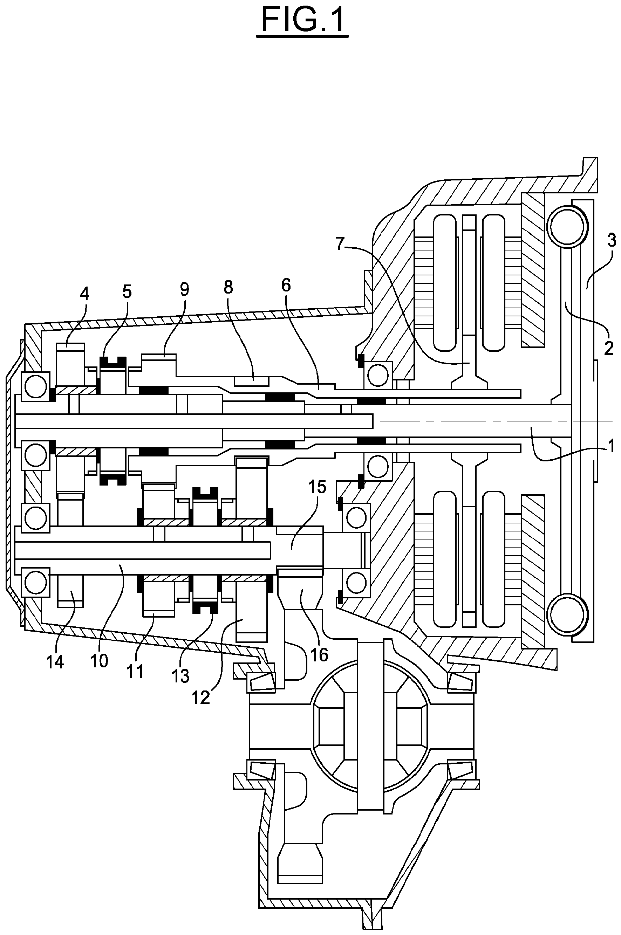

On se référera tout d'abord à la figure 1 qui illustre l'architecture générale d'une transmission de véhicule automobile, constituée ici par une transmission hybride pour un véhicule automobile comprenant d'une part un moteur thermique d'entraînement et d'autre part une machine électrique.

La transmission illustrée sur la figure 1 comporte un arbre primaire plein 1 connecté directement par l'intermédiaire d'un système de filtration (moyeu amortisseur, « damper », double volant ou autre) 2, au volant d'inertie 3 d'un moteur thermique (non représenté).

L'arbre plein 1 porte un pignon fou 4 pouvant être connecté avec l'arbre 1 par un premier système de couplage 5 à crabot. Un arbre primaire creux 6 est relié au rotor d'une machine électrique 7. L'arbre creux 6 porte deux pignons fixes 8 et 9 et peut être relié à l'arbre primaire plein par l'intermédiaire du système de couplage 5. Un arbre secondaire 10 porte deux pignons fous 11 et 12 qui peuvent être reliés à l'arbre primaire par l'intermédiaire d'un deuxième système de couplage 13 à crabot. L'arbre secondaire 10 porte également un pignon fixe 14 et un pignon de descente 15 vers un différentiel 16 relié aux roues (non représentées) du véhicule.

Le premier moyen de couplage 5 occupe au moins trois positions dans lesquelles :

- le moteur thermique est découplé de la chaîne cinématique reliant la machine électrique 7 aux roues (position 1),
- le moteur thermique entraîne les roues avec ou sans l'appoint de la machine électrique (position 2), et
- le moteur thermique et la machine électrique 7 sont couplés de manière à additionner en direction des roues leurs couples respectifs (position 3).

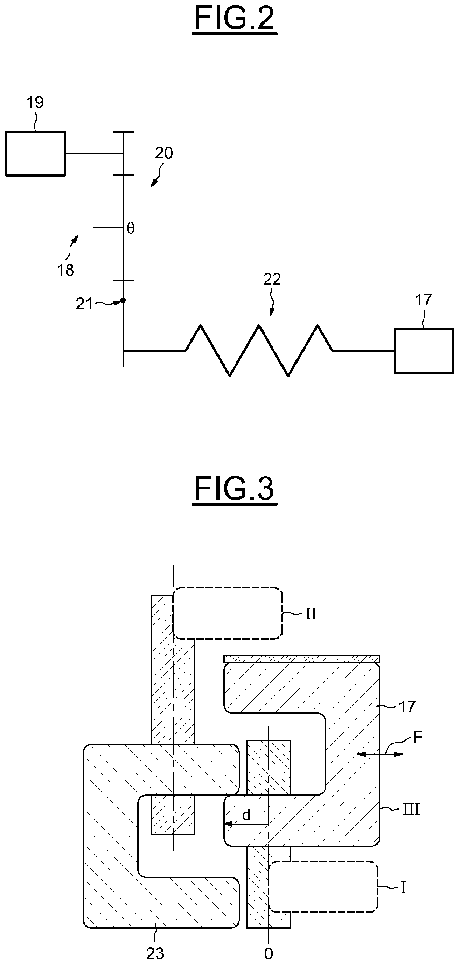

En référence à la figure 2, qui illustre le principe de la chaîne d'actionnement d'un passage de vitesses, les systèmes de couplage tels que 5 et 13 d'une transmission pour véhicule automobile utilisent classiquement un crabot mobile 17 dont le déplacement est piloté par un système d'actionnement 18 comprenant un moteur électrique 19 qui provoque le déplacement en translation du crabot mobile 18 par rapport à un crabot fixe par l'intermédiaire d'un réducteur 20, d'un dispositif 21 de transformation de mouvement et d'un mécanisme d'assistance 22 comprenant un moyen de stockage d'énergie, ici un ressort.

On se référera maintenant à la figure 3 qui montre diverses positions respectives du crabot mobile 17 par rapport à un crabot fixe 23.

Comme indiqué précédemment, le crabot mobile 17, qui est par exemple ici constitué par un clabot ayant des dents de forme rectangulaire qui coopèrent avec des dents de forme correspondante pratiquées sur le crabot fixe 23, est déplacé en translation sous l'action du mécanisme d'actionnement 18 selon la flèche F entre une position de neutre I dans laquelle le crabot mobile est totalement désengagé du crabot fixe et une position engagée II dans laquelle les dents du crabot mobile engrènent avec les dents du crabot fixe, en passant par une position intermédiaire III correspondant à une position limite de désengagement dans laquelle le crabot mobile est en prise avec le crabot fixe et dans laquelle la phase suivante de déplacement du crabot mobile est une position de désengagement ou de décrabotage du crabot mobile.

On notera que, à partir d'une position désengagée, lorsque le crabot mobile est déplacé dans le sens du crabotage, c'est-à-dire de la droite vers la gauche de la figure 3, et lorsque les crabots fixe et mobile sont mutuellement décalés de sorte que les dents ne viennent pas en butée, le crabot mobile se déplace linéairement jusqu'à la position II.

Au contraire, lorsque les dents du crabot mobile viennent buter contre les dents du crabot fixe, le crabot mobile reste fixe et le ressort 22 du dispositif de stockage d'énergie se comprime en emmagasinant l'énergie mécanique produite par le système d'actionnement pour la restituer ensuite lorsque le crabotage devient possible.

En tout état de cause, le système de pilotage de la transmission intègre un algorithme de contrôle qui prend en compte la position limite de désengagement. Il est en effet nécessaire que, lorsque le système de pilotage de la transmission pilote la position du crabot mobile de manière à ce qu'il soit en position désengagée et considère dès lors que les crabots sont décrabotés, le crabot mobile soit effectivement désengagé.

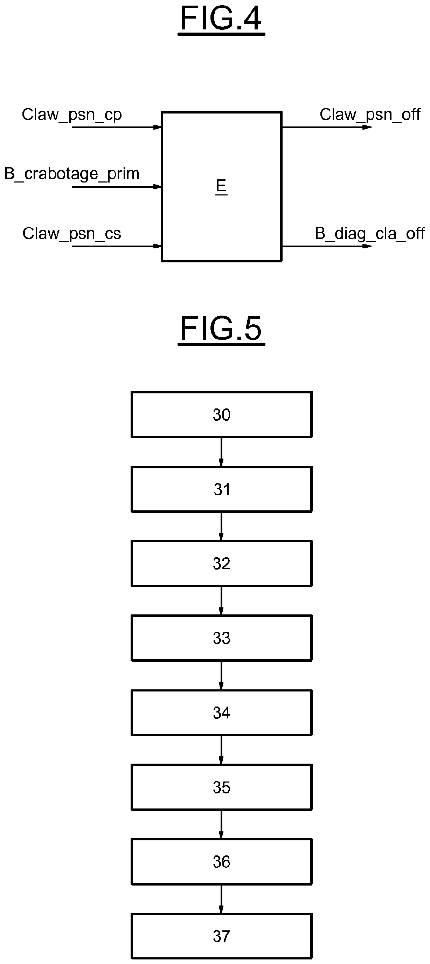

Le système de contrôle incorpore ainsi un étage E (figure 4) comprenant des moyens matériels et logiciels dûment programmés pour contrôler la position limite de désengagement, et diagnostiquer une déviation de ce seuil de désengagement au cours de la vie de la transmission afin, notamment, de corriger ce seuil de désengagement.

Cet étage E de contrôle reçoit, en entrée, une valeur consigne de position du crabot mobile Claw_psn_sp, un signal de demande de crabotage B_crabotage_prim et une valeur de position de crabot consolidée Claw_psn_cs et fournit, en sortie, une valeur de seuil de désengagement consolidée Claw_psn_off et une valeur booléenne indiquant une déviation du seuil de désengagement par rapport à une valeur de seuil de référence B_diag_claw_off.

En d'autres termes, l'étage E calcule, à partir des données d'entrée, la distance d (figure 3) entre la position de neutre « 0 » et le début de la position engagée et compare cette distance avec une position calibrée en usine pour détecter une déviation du seuil de désengagement et ce avec une marge de sécurité.

On va maintenant décrire en référence à la figure 5 les principales phases du procédé de contrôle mis en œuvre par l'étage E du système de pilotage de la boîte pour déterminer la valeur limite de désengagement du crabot mobile.

On notera en premier lieu que la valeur de la position du crabot peut être fournie en utilisant un capteur approprié.

Selon l'invention elle est cependant déduite de la position du système d'actionnement 18. Toutefois, une telle valeur brute doit être corrigée ou consolidée de manière à prendre en compte le retard entre l'application d'une consigne de position et le déplacement effectif du crabot mobile.

Ainsi, lors de la première étape 30, on définit une valeur de consigne de position du crabot mobile retardée Claw_psn_sp_delay telle que :

$$Claw\_psn\_sp\_delay(t) = 1000 * Claw\_psn\_sp(t - t\_delay)\, avec\, 0 < t\_delay \le 1\sec onde$$

dans laquelle t_delay désigne le retard dû à l'actionnement du système d'actionnement.

Lors de l'étape 31 suivante, on détecte si une demande de crabotage a été faite ou en d'autres termes, si la valeur de consigne de position du crabot mobile est supérieure à une valeur de seuil de consigne de position d'engagement.

En d'autres termes, on définit une valeur booléenne B_claw_psn_sp_delay_ok, indiquant que la consigne de position du crabot retardée est supérieure au seuil de consigne de position d'engagement Seuil_eng tel que :

$$B\_claw\_psn\_sp\_delay\_ok = 1\, si\, |Claw\_psn\_sp\_delay(t)| \ge Seuil\_eng$$

$$avec\, 4,5 \le 6\, mm$$

Lors des étapes 32 et 33 suivantes, on détecte si le crabot mobile vient en butée contre le crabot fixe.

En d'autres termes, lors de l'étape 32, on définit une variable Claw_psn_cs_dot_fil telle que :

$$Claw\_psn\_cs\_dot\_fil = Deriv\_Fil(1000 * Claw\_psn\_cs)$$

où Deriv_Fil est une dérivée filtrée avec une constante de temps comprise entre 10 ms et 500 ms.

Lors de l'étape 33, on définit une variable booléenne B_claw_psn_cs_dot_fil_temp, indiquant que la dérivée filtrée ci-dessus est inférieure au seuil Seuil_der pour lequel on considère que le baladeur est bloqué en position dent sur dent telle que :

$$B\_claw\_psn\_cs\_dot\_fil\_temp = 1\, si\, |Claw\_psn\_cs\_dot\_fil| \le Seuil\_der$$

$$avec\, 1 \le Seuil\_der \le 5mm/s.$$

En d'autres termes, si le crabot mobile vient en butée contre une dent, la valeur du déplacement du crabot mobile s'annule de sorte que sa dérivée se rapproche de zéro pendant la valeur de seuil Seuil_der.

Lors de l'étape 34 suivante, on définit une variable booléenne B_claw_psn_cs_dot_fil_ok telle que :

$$B\_claw\_psn\_cs\_dot\_fil\_ok = 1 \ si \ B\_claw\_psn\_dot\_fil\_temp = 1 \ depuis \ tempo$$
$$\_confir \ avec \ 0 < tempo\_confir \leq 100ms.$$

En d'autres termes, on vérifie que le crabot mobile reste bloqué pendant une durée suffisante tempo_confir pouvant aller jusqu'à 100 ms.

Lors de l'étape 35 suivante, on s'assure qu'un certain nombre de critères prédéfinis sont satisfaits avant de procéder à un calcul proprement dit de la position limite de désengagement.

On définit une variable booléenne B_trig_seuil_deseng telle que :

$$B\_trig\_seuil\_deseng = 1 \ si \ B\_crabotage\_prim = 1$$

$$ET \ B\_claw\_psn\_sp\_delay\_ok = 1$$

$$ET \ B\_claw\_psn\_cs\_dot\_fil\_ok = 1$$

Au cours de cette phase, on définit une variable booléenne qui est positionnée à « 1 » si il a été déterminé, lors des étapes précédentes, que le système d'actionnement a été activé, qu'une demande de désengagement a bien été formulée, et que le crabot mobile est en position de butée et ce pendant une durée prédéterminée.

Si tel est le cas, on procède ensuite au calcul de la valeur de seuil de désengagement Claw_psn_off (étape 36).

Claw_psn_off est alors défini par la relation suivante :

$$Claw\_psn\_off = Claw\_psn\_cs\big(t\_trig\big)$$

où t_trig est l'instant où B_trig_seuil_deseng passe de la valeur 0 à 1.

En d'autres termes, la valeur limite calculée correspond à la position du crabot mobile en butée contre le crabot fixe, c'est-à-dire à la valeur de consigne de position consolidée du crabot mobile au moment où la variable booléenne calculée lors de l'étape 35 précédente passe au niveau 1.

Lors de l'étape 37 suivante, on procède à une détection de la déviation éventuelle du seuil de désengagement par rapport à une valeur de seuil de référence en calculant une variable booléenne B_diag_claw_off.

B_diag_claw_off est alors défini par la relation suivante :

$$B\_diag\_claw\_off = 1 \ si \ \big|Claw\_psn\_off - Claw\_psn\_off\_u\sin e\big| > seuil\_déviation$$

où Claw_psn_off_usine est le seuil de désengagement réglé en usine et 0 < seuil_déviation ≤ 1 *mm.*

Si une telle déviation a été détectée, on peut soit mettre à jour la nouvelle valeur limite au sein du système de pilotage de la transmission ou émettre une alarme en vue de provoquer une phase de maintenance.

## Revendications

1. Procédé de contrôle de la position limite de désengagement d'un crabot mobile (17) par rapport à un crabot fixe (23) d'une transmission de véhicule automobile, comportant les étapes suivantes:

   - on acquiert des valeurs de position du crabot mobile ;
   - on détecte une position de butée du crabot mobile contre le crabot fixe pendant une durée prédéterminée ; et
   - on calcule ladite position limite à partir de la valeur de consigne de position du crabot mobile (17) en butée contre le crabot fixe (23),

**caractérisé en ce que** l'on compare la position du crabot mobile avec un seuil de détection de position d'engagement et l'on procède à l'étape de calcul de ladite position limite si le crabot a été déplacé en position d'engagement, les valeurs de consigne de position du crabot mobile (17) étant traitées de manière à appliquer un retard correspondant à un retard de mise en œuvre d'un actionneur (18). pour obtenir la valeur de position du crabot mobile.

2. Procédé selon la revendication 1, dans lequel on calcule en outre la différence entre la position limite calculée et une position limite de désengagement calibrée et l'on compare le résultat dudit calcul de différence avec une valeur de seuil de détection de déviation de la position limite de désengagement.

3. Procédé selon l'une quelconque des revendications 1 ou 2, dans lequel la position de butée du crabot (17) est détectée à partir d'un calcul de la dérivée filtrée de la position du crabot mobile et dans lequel on compare ladite dérivée filtrée avec une valeur de seuil de détection de butée.

4. Procédé selon la revendication 3, dans lequel on détecte une position de butée si la dérivée filtrée est inférieure à ladite valeur de seuil pendant ladite durée déterminée.

5. Transmission pour véhicule automobile, comprenant un ensemble d'au moins un crabot (17) mobile par rapport à un ensemble correspondant de crabots fixes (23) sous l'action d'un actionneur (18), **caractérisée en ce qu'**elle comporte des moyens (E) pour contrôler une position limite de désengagement du crabot mobile par rapport au crabot fixe, comprenant des moyens pour acquérir des valeurs de position du crabot mobile (17), des moyens de détection d'une position de butée du crabot mobile (17) contre le crabot fixe (23) pendant une durée prédéterminée et des moyens de calcul pour calculer ladite position limite de désengagement à partir de la valeur de la consigne de position du crabot mobile en butée contre le crabot fixe, la valeur de position du crabot mobile (17) étant obtenue à partir de la valeur de consigne de position du crabot mobile traitée de manière à appliquer un retard correspondant à un retard de mise en œuvre de l'actionneur (18).

**Patentansprüche**

1. Verfahren zur Steuerung der Entkopplungsgrenzposition eines beweglichen Mitnehmers (17) in Bezug auf einen stationären Mitnehmer (23) eines Kraftfahrzeuggetriebes, umfassend die folgenden Schritte:

- Erfassen von Positionswerten des beweglichen Mitnehmers;
- Detektieren einer Anlageposition des beweglichen Mitnehmers an dem stationären Mitnehmer während eines vorgegebenen Zeitraums; und
- Berechnen der Grenzposition basierend auf dem Positionssollwert des beweglichen Mitnehmers (17) bei Anlage an dem stationären Mitnehmer (23),

**dadurch gekennzeichnet, dass** die Position des beweglichen Mitnehmers mit einer Detektionsschwelle einer Einkopplungsposition verglichen wird und anschließend mit dem Schritt des Berechnens der Grenzposition fortgefahren wird, wenn der Mitnehmer in die Einkopplungsposition bewegt wurde, wobei die Positionssollwerte des beweglichen Mitnehmers (17) so verarbeitet werden, dass eine Verzögerung, die einer Umsetzungsverzögerung eines Stellglieds (18) entspricht, angewendet wird, um den Positionswert des beweglichen Mitnehmers zu erhalten.

2. Verfahren nach Anspruch 1, wobei ferner die Differenz zwischen der berechneten Grenzposition und einer kalibrierten Entkopplungsgrenzposition berechnet wird und das Ergebnis der Differenzberechnung mit einem Detektionsschwellenwert einer Abweichung der Entkopplungsgrenzposition verglichen wird.

3. Verfahren nach einem beliebigen der Ansprüche 1 oder 2, wobei die Anlageposition des Mitnehmers (17) basierend auf einer Berechnung der gefilterten Ableitung der Position des beweglichen Mitnehmers detektiert wird und wobei die gefilterte Ableitung mit einem Anlagedetektionsschwellenwert verglichen wird.

4. Verfahren nach Anspruch 3, wobei eine Anlageposition detektiert wird, wenn die gefilterte Ableitung während des vorgegebenen Zeitraums kleiner als der Schwellenwert ist.

5. Getriebe für ein Kraftfahrzeug, beinhaltend eine Anordnung aus mindestens einem Mitnehmer (17), die unter Einwirkung eines Stellglieds (18) in Bezug auf eine entsprechende Anordnung aus stationären Mitnehmern (23) beweglich ist, **dadurch gekennzeichnet, dass** es Mittel (E) zur Steuerung einer Entkopplungsgrenzposition des beweglichen Mitnehmers in Bezug auf den stationären Mitnehmer umfasst, beinhaltend Mittel zur Erfassung von Positionswerten des beweglichen Mitnehmers (17), Mittel zur Detektion einer Anlageposition des beweglichen Mitnehmers (17) an dem stationären Mitnehmer (23) während eines vorgegebenen Zeitraums und Berechnungsmittel zum Berechnen der Entkopplungsgrenzposition basierend auf dem Positionssollwert des beweglichen Mitnehmers bei Anlage an dem stationären Mitnehmer, wobei der Positionswert des beweglichen Mitnehmers (17) basierend auf dem Positionssollwert des beweglichen Mitnehmers erhalten wird, welcher so verarbeitet wird, dass eine Verzögerung, die einer Umsetzungsverzögerung des Stellglieds (18) entspricht, angewendet wird.

## Claims

1. Method for controlling the disengagement limit position of a movable dog (17) relative to a fixed dog (23) of a motor vehicle transmission, having the following steps:

   - position values of the movable dog are acquired;
   - an abutment position of the movable dog against the fixed dog is detected for a predefined time; and
   - said limit position is calculated from the setpoint position value of the movable dog (17) in abutment against the fixed dog (23),

   **characterized in that** the position of the movable dog is compared with an engagement position detection threshold, and step of calculating said limit position is carried out if the dog has been shifted into the engagement position, the setpoint position values of the movable dog (17) being processed so as to apply a delay corresponding to a delay in the implementation of an actuator (18) in order to obtain the position value of the movable dog.

2. Method according to Claim 1, wherein the difference between the calculated limit position and a calibrated disengagement limit position is also calculated and the result of said difference calculation is compared with a threshold value for the detection of any deviation from the disengagement limit position.

3. Method according to either one of Claims 1 and 2, wherein the abutment position of the dog (17) is detected on the basis of a calculation of the filtered derivative of the position of the movable dog, and wherein said filtered derivative is compared with an abutment detection threshold value.

4. Method according to Claim 3, wherein an abutment position is detected if the filtered derivative is lower than said threshold value for said defined time.

5. Transmission for a motor vehicle, comprising an assembly of at least one dog (17) that is movable relative to a corresponding assembly of fixed dogs (23) under the action of an actuator (18), **characterized in that** it has means (E) for controlling a disengagement limit position of the movable dog relative to the fixed dog, comprising means for acquiring position values of the movable dog (17), means for detecting an abutment position of the movable dog (17) against the fixed dog (23) for a predefined time and calculation means for calculating said disengagement limit position from the setpoint position value of the movable dog in abutment against the fixed dog, the position value of the movable dog (17) being obtained from the setpoint position value of the movable dog processed so as to apply a delay corresponding to a delay in the implementation of the actuator (18).

# FIG.1

## FIG.2

## FIG.3

# FIG.4

Claw_psn_cp →

B_crabotage_prim →

E

Claw_psn_cs →

→ Claw_psn_off

→ B_diag_cla_off

# FIG.5

| 30 |
|---|
| 31 |
| 32 |
| 33 |
| 34 |
| 35 |
| 36 |
| 37 |

**RÉFÉRENCES CITÉES DANS LA DESCRIPTION**

**Documents brevets cités dans la description**

- FR 2977198
- FR 2973299
- DE 102004017794
- EP 1887258 A